# EUROPÄISCHE PATENTANMELDUNG

(11) **EP 2 130 424 A1**
(43) Veröffentlichungstag der Anmeldung: **09.12.2009**
(21) Anmeldenummer: 08384601.4
(22) Anmeldetag: 03.06.2008
(51) Int. Cl.: A01D 78/10

(54) **Dritter Rotorausrichtungstransport**

(71) Anmelder: Durán Maquinaria Agricola S.L., 27192 Muxa Lugo (ES)
(72) Erfinder: Durán Ónega, Antonio, 27002 Lugo (ES)

(57) **Zusammenfassung**

Die wichtigste Charaktereigenschaft dieses Rotores ist es, 2 Seitenschwaden auf eine Mittelschwade zusammenzuführen, gleich wie bereits existierende Maschinen, jedoch mit dem Unterschied, dass auch die Mittelschwade aufgewühlt wird, welches ein zusätzliches wichtiges Plus des Rotors ist, weil die Trocknung dieser Schwade die Qualität des Futters verbessert.

Die Charaktereigenschaft, welche mit dem Patent geschützt werden soll, ist die Funktionsform des Gerätes: Es basiert sich darauf, einen Rotor vor den anderen 2 Seitenrotoren anzuwenden, welcher die Mittelschwade umdreht, um danach mit den 2 Rotoren die Seitenschwaden zu einer einzigen Mittelschwade zusammenzuführen

## Beschreibung

### BESCHREIBUNG DER ERFINDUNG

Die Erfindung des Gerätes besteht in der Installierung eines dritten Rotors, welcher kleriner ist als die vorherigen und hydraulisch angetrieben wird, der die Mittelschwade auf eine der Seitenschwaden umwirft und gleichzeitig aufwühlt und im folgenden Schritt transportieren die Seitenrotoren die zwei Schwaden (die nun in 1 vereint sind) wieder in die Mitte. Auf diese Art erzielt man, dass die 3 Schwaden in 1 einzige zusammengefügt werden, und dass alle Schwaden aufgewühlt wurden, was den Trocknungsprozess enorm fördert.

Der dritte Rotor wird mit einer Schelle an den Schwader angehängt und mit einer Hydraulikvorrichtung ausgestattet, welche die Position je nach Gebrauch anpasst.

Das heisst, bei Strassentransport wird der Rotor angehoben, bei Feldarbeit ist der Rotor dicht über dem Boden.

Um die nachfolgende Beschreibung zu vervollständigen und die Charakteristiken der Erfindung besser zu verstehen, liegt der Beschreibung ein Funktionsschema bei, welches die Innovation und Vorteile der Erfindung leichter verständlich macht.

### KURZE BESCHREIBUNG DER ZEICHNUNG

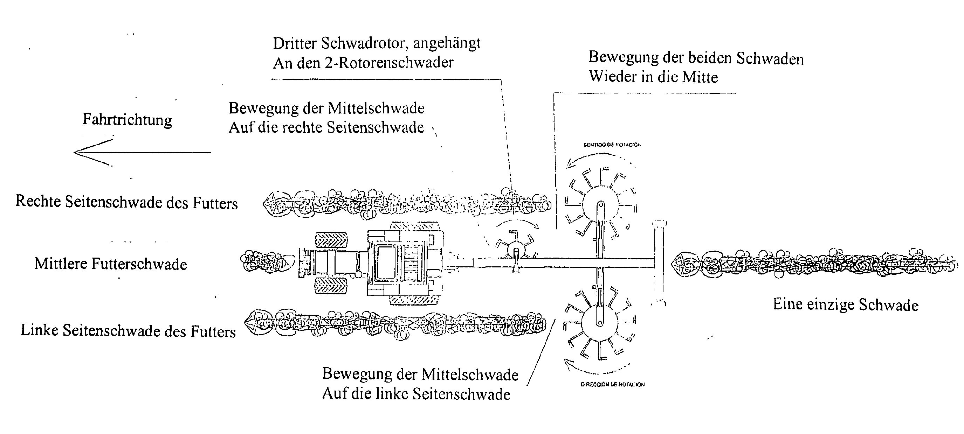

Bild 1 stellt die Funktion des angehängten Rotors an den Schwader (mit 2 Rotoren) dar, welcher wiederum am Traktor angekuppelt ist.

### BESCHREIBUNG DER ANHÄNGUNGSFORM

Das Gerät wird an den Hauptrahmen des Schwaders mit einer Schelle, welche 2 Leisten hat, vor den 2 Seitenrotoren angehängt. Die 2 Leisten müssen genug gross und stark sein, um der hydraulischen Anhebung des Rotors standzuhalten.

Auch die Achse, wo der Rotor befestigt wird, ist ausziehbar und hat zwei konzentrisch geneigte Teile wobei das äussere der inneren als Führung dient, an dem der Rotor direkt angemacht ist und mit einem Kugellager ausgestattet ist. Beide Teile haben Bohrungen um die Stiftschrauben zu installieren, welche den hydraulsichen Mechanismus in der Führung halten.

Das äussere Teil hat zusätzlich 2 ähnliche Leisten wie die Schelle des Rahmens, welche den oberen Teil der Hydraulikanhebung für den ganzen Mechnismus festhält. Daher hat es 2 hydraulische Hebevorrichtungen, der erste hebt die Führung über den Rahmen um mit dem Schwader zu fahren, und der zweite, welcher die Rotorhalterung innerhalb der Führung bewegt. Dieser hat die Funktion, ihn auf die richtige Distanz zum Boden zu platzieren, wenn er in Arbeitsposition steht.

## Patentansprüche

1. Als dritter Aufwühlrotor des Schwaders: Der Schwader muss mit 2 Grundrotoren ausgestattet sein. Die Ergänzung besteht darin, einen kleineren Rotor vor den Grundrotoren anzuhängen.

2. Dritter Aufwühlrotor des Schwaders, welcher sich mit Hydraulikmechanismus auszeichnet: einer für den Strassentransport und einer für die Arbeitsposition, um die Bodendistanz zu regulieren.

3. Dritter Aufwühlrotor des Schwaders, der sich **dadurch** auszeichnet weil die Drehung des Rotors durch einen Hydraulikmechanismus besorgt wird.
